(19) **Europäisches Patentamt / European Patent Office / Office européen des brevets**

(11) **EP 1 429 997 B1**

(12) **EUROPÄISCHE PATENTSCHRIFT**

(45) Veröffentlichungstag und Bekanntmachung des Hinweises auf die Patenterteilung:
**18.07.2007 Patentblatt 2007/29**

(21) Anmeldenummer: **02777148.4**

(22) Anmeldetag: **19.09.2002**

(51) Int Cl.:
*C01B 33/146* (2006.01)      *C03C 17/00* (2006.01)
*C09D 183/02* (2006.01)      *C03C 17/25* (2006.01)

(86) Internationale Anmeldenummer:
**PCT/EP2002/010492**

(87) Internationale Veröffentlichungsnummer:
**WO 2003/027015 (03.04.2003 Gazette 2003/14)**

(54) **NEUARTIGES HYBRID-SOL ZUR HERSTELLUNG ABRIEBFESTER SIO 2 ANTIREFLEXSCHICHTEN**

NOVEL HYBRID SOL FOR PRODUCING ABRASION-RESISTANT SIO 2 ANTIREFLECTION COATINGS

NOUVEAU SOL HYBRIDE POUR LA REALISATION DE COUCHES ANTIREFLETS SIO 2 RESISTANTES A L'USURE

(84) Benannte Vertragsstaaten:
**AT BE BG CH CY CZ DE DK EE ES FI FR GB GR IE IT LI LU MC NL PT SE SK TR**

(30) Priorität: **21.09.2001 DE 10146676**

(43) Veröffentlichungstag der Anmeldung:
**23.06.2004 Patentblatt 2004/26**

(73) Patentinhaber: **Merck Patent GmbH**
**64293 Darmstadt (DE)**

(72) Erfinder:
• **GLAUBITT, Walther**
  **97276 Margetshöchheim (DE)**
• **KURSAWE, Monika**
  **64342 Seeheim-Jugenheim (DE)**
• **GOMBERT, Andreas**
  **79100 Freiburg (DE)**
• **HOFMANN, Thomas**
  **90763 Fürth (DE)**

**Beschreibung**

Die Erfindung betrifft ein stabiles Sol aus $[SiO_x(OH)_y]$-$_n$ Partikeln zur Herstellung einer abriebfesten, porösen $SiO_2$-Antireflexschicht auf Substraten, vorzugsweise Glas, sowie ein Verfahren zur Herstellung dieser Lösung. Die poröse $SiO_2$-Antireflexschicht erhöht die Transmission von Licht über das gesamte solare Spektrum. Glas, das mit einer derartigen, porösen $SiO_2$-Antireflexschicht versehen ist, eignet sich daher besonders für Abdeckungen von Sonnenkollektoren und photovoltaische Zellen.

Bei senkrechtem Einfall von Licht entstehen an Grenzflächen von Luft zu Glas Reflexionsverluste von etwa 4 %. Die Verluste bei Gläsern, die zur Abdeckung solarer Systeme, wie zum Beispiel photovoltaischer Zellen oder Sonnenkollektoren, verwendet werden, verringern den Wirkungsgrad der Systeme.

Zur Beschichtung von Gläsern mit dem Ziel, die Transmission von Licht zu erhöhen, existieren mehrere Verfahren. Üblich ist das Aufbringen von Mehrfach-Interferenzschichten. Hierbei werden abwechselnd zwei oder mehr Schichten hoch- bzw. niedrigbrechender Materialien übereinander aufgebracht. In einem bestimmten Wellenlängenbereich löschen sich dann die reflektierten Wellen aus. Ein Beispiel hierfür sind Antireflexschichten auf Architekturglas der Firma Schott Glaswerke, die über ein Sol-Gel-Verfahren hergestellt und über Tauchbeschichtungen aufgebracht werden. Die Frequenzbandbreite dieser Entspiegelung ist aber physikalisch auf eine Oktave begrenzt und eignet sich nur für Entspiegelungen im sichtbaren Bereich, nicht aber für Entspiegelungen im breitbandigen solaren Spektrum.

Neben den üblichen Mehrfachbeschichtungen gibt es auch die Möglichkeit, eine Antireflexwirkung über eine Einfachbeschichtung zu generieren. In diesem Fall wird auf Glas eine sogenannte $\lambda/4$-Schicht aufgebracht, d.h. eine Schicht mit der optischen Dicke $\lambda/4$ ($\lambda$ = Wellenlänge des gewünschten Reflexionsminimums), wobei der Brechungsindex der Schicht idealerweise den Wert $\sqrt{n_D(Glas) \cdot n_D(Luft)}$ haben sollte. In diesem Fall löschen sich die Amplituden der reflektierten Wellen bei $\lambda$ aus. Mit einem üblichen Brechungsindex von eisenarmen Glas mit $n_D$ = 1.5 ergibt sich ein optimaler Brechungsindex der Antireflexschicht von 1.22. In diesem Fall ist die Reflexion einer elektromagnetischen Strahlung mit der Wellenlänge $\lambda$ Null.

Die meistverwendete Antireflex-Einfachschicht dieser Art ist eine durch Aufdampfen aufgebrachte $\lambda/4$-Schicht aus $MgF_2$ mit einem Brechungsindex von 1.38. Die Restreflexion liegt in diesem Fall bei 1.2 % im Reflexionsminimum. Ein noch niedrigerer Brechungsindex ist mit stabilen, dichten Schichten nicht erreichbar.

Poröse Beschichtungen bieten die Möglichkeit, den Brechungsindex einer Einfachschicht weiter zu reduzieren. Hierfür werden drei Methoden beschrieben: das Ätzen von Glas, das Aufbringen einer porösen Schicht und die Kombination aus poröser Schicht und einem Ätzvorgang.

Zum Ätzen eignen sich Natron-Kalk-Gläser (US 2 490 662) und solche Gläser, die eine Phasenseparation in der Matrix aufweisen, so dass eine lösliche Phase mit dem Ätzmittel herausgelöst werden kann. US 4 019 884 beschreibt ein Verfahren zur Herstellung einer Antireflexschicht auf Borosilikatglas mit einer Reflexion von weniger als 2 % im Wellenlängenbereich von 0,4 - 2,0 mm durch Erhitzen des Borosilikatglases auf eine Temperatur von 630 - 660 °C für 1 - 10 Stunden, um durch eine Phasentrennung eine stabile Oberfläche zu erzeugen und anschließende Behandlung mit Flußsäure für 1 - 4 Stunden bei 630 - 660 °C. Nachteilig bei diesem Verfahren ist die Verwendung von Flußsäure und die mangelnde Homogenität der geätzten Schicht.

Aus US 4 535 026 ist außerdem das nachträgliche Ätzen von Gläsern, die zuvor mit einer porösen $SiO_2$-Schicht versehen werden, bekannt. Die hierfür verwendete Beschichtungslösung wird durch Umsetzung von Siliziumalkoxid mit Wasser und einem Katalysator in Alkohol erhalten. Die getrocknete Gelschicht wird erhitzt, um organische Bestandteile zu entfernen und eine hinreichende Abriebstabilität der Schicht zu generieren. Erhalten wird eine poröse $SiO_2$-Schicht, wobei jedoch ein nachträglicher Ätzvorgang notwendig ist, um die Poren zu vergrößern. Schließlich kann mit diesem Verfahren eine Antireflexschicht mit 0.1 % Restreflexion erhalten werden.

Die Herstellung einer Beschichtungslösung, mit der die Herstellung einer abriebstabilen, porösen $SiO_2$-Antireflexschich gelingt, die nicht nachträglich geätzt werden muß, ist bislang nicht beschrieben worden. Es ist im Gegenteil ein allgemein akzeptiertes Vorgehen bei der Herstellung poröser Antireflexschichten, die $SiO_2$-Gelschichten lediglich Temperaturen bis zu 500 °C auszusetzen, um die Porosität der Schicht zu erhalten und ein Zusammensintern der Schicht, verbunden mit dem Verkleinern des Porenvolumens, zu vermeiden. Damit würde die Brechzahl der Schicht ansteigen und sich die Wirkung der Antireflexschicht verschlechtern (Sol Gel Science, C. J. Brinker, G. W. Scherer, Academic Press 1990, S. 583, 631; Sol-Gel Technology for Thin Films, Noyes Publications, 1988, ed. Lisa C. Klein, S. 70). Die Temperaturbeaufschlagung der Gelschicht mit möglichst hohen Temperaturen ist jedoch notwendig, um über eine Vernetzung des Orthokieselsäure-Netzwerkes in der Schicht eine gute Abriebfestigkeit der Schicht zu erzielen. Cathro et al. beschreiben in Solar Energy 32, 1984, S. 573, dass ausreichend wischfeste $SiO_2$-Antireflexschichten auf Glas nur durch Temperaturbeaufschlagung von mindestens 500 °C zu erhalten wären. Moulton et al. weisen in US 2 601 123 sogar darauf hin, dass die Temperatur bei dem Tempern der Gelschicht im Erweichungsbereich des Glases liegen sollte. Zur Herstellung von Sicherheitsglas sind sogar noch höhere Temperaturen erforderlich. Hierbei muß das Glas bei einer Temperatur von mindestens 600 °C, in der Regel sogar 700 °C erweicht werden, bevor es durch einen Abschreckprozeß vorgespannt wird.

Ungenügende Abriebfestigkeit besitzen Antireflexschichten, die nach dem in DE 196 42 419 beschriebenen Verfahren auf Glasoberflächen aufgetragen werden. Bei einem Abriebtest nach DIN EN 1096-2 wird nach 100 Hüben die Schicht vollständig entfernt. Bereits nach 10 Hüben weist die Schicht Beschädigungen auf.

In DE 198 28 231 wird ein Verfahren zur Abscheidung poröser optischer Schichten von Metalloxiden auf Gläsern, Keramiken oder Metallen beschrieben, indem ein wäßriges Sol oder Solgemisch, dem ein Tensid zugesetzt ist, auf das zu beschichtende Substrat aufgebracht wird und dieses bei Temperaturen von 100 bis 550 °C getempert wird. Die erhaltenen Schichten besitzen gegenüber den in DE 196 42 419 beschriebenen Schichten eine bessere Abriebfestigkeit. Bei einem Abriebtest nach DIN EN 1096-2 weisen sie aber nach 100 Hüben Beschädigungen auf.

In der noch nicht veröffentlichten DE 100 51 725 wird eine wäßrige, $SiO_2$-Partikel enthaltende Beschichtungslösung für die Abscheidung einer porösen Antireflexschicht auf Glas beschrieben, die bei Temperaturen bis 700°C im Rollenofen getempert wird. Die optisch transparente Schicht besitzt eine hohe Abriebfestigkeit. Bei einem Abriebtest nach DIN EN 1096-2 weist die Schicht auch nach 100 Hüben keine Kratzer auf.

Nachteilig ist aber, daß die Siliziumdioxidschicht als Systemeigenschaft eine Streifenstruktur besitzt, die das ästhetische Erscheinungsbild mindert, obwohl die Schwankungen im Reflexionsvermögen innerhalb der Schicht meßtechnisch nicht erfaßbar sind.

Nachteilig ist außerdem die schlechte Beschichtbarkeit von strukturiertem Glas, was sich in einer niedrigen solaren Transmission für beschichtete Strukturgläser auswirkt.

Die Härtung im Rollenofen bewirkt außerdem naturgemäß Schichtdickenimhomogenitäten.

Aufgabe der Erfindung ist es, eine Beschichtungslösung zur Herstellung einer Antireflexschicht mit einer Brechzahl bereitzustellen, die nahe der optimalen Brechzahl von 1,22 liegt und die eine hohe Abriebfestigkeit und ein homogenes Erscheinungsbild besitzt und auch für die Beschichtung von Strukturglas geeignet ist. Weiterhin ist Aufgabe der Erfindung das Vermeiden von Rollenofen bedingten Schichtinhomogenitäten in der Schicht.

Diese Aufgabe wird erfindungsgemäß gelöst durch ein Hybrid-Sol, umfassend $[SiO_x(OH)_y]_n$-Partikel, wobei $0<y<4$ und $0<x<2$ ist, die aus einem Gemisch aus einer ersten Fraktion von Partikeln mit einer Teilchengröße von 4-15 nm und einer zweiten Fraktion von Partikeln mit einer mittleren Teilchengröße von 20-60 nm bestehen, Wasser und ein Lösemittel; erhältlich durch hydrolytische Polykondensation von Tetraalkoxysilanen in einem wäßrigen, Lösemittel enthaltenden Medium, wobei Siliziumoxid-Hydroxid-Partikel mit einer Teilchengröße erhalten werden, die im wesentlichen im Bereich von 4-15 nm liegt, unter Zusatz eines monodispersen Siliziumoxid-Hydroxid-Sols mit einer mittleren, auf die Anzahl der Partikel bezogenen Teilchengröße von 20-60 nm und einer Standardabweichung von höchstens 20 %.

Besondere Ausführungsformen sind in den Unteransprüchen enthalten.

Weiterhin wird diese Aufgabe gelöst durch ein Verfahren zur Herstellung eines Hybrid-Sols durch hydrolytische Polykondensation eines Tetraalkoxysilans in einem wäßrigen, Lösemittel enthaltenden Medium, wobei ein Hydrolysegemisch mit Siliziumoxid-Hydroxid-Partikeln der Teilchengröße 4-15 nm erhalten wird, und Zugabe eines monodispersen Siliziumoxid-Hydroxid-Sols mit einer mittleren Teilchengröße von 20-60 nm und einer Standardabweichung von höchstens 20 %, zu einem Zeitpunkt von mindestens 5 Minuten nach Zugabe des Tetraalkoxysilans in das wäßrige, Lösemittel enthaltende Medium.

Gegenstand der Erfindung ist weiterhin eine abriebfeste, optisch transparente, Siliziumdioxidschicht auf Gläsern mit einer Brechzahl, die zwischen 1,20 und 1,40 und damit nahe der optimalen Brechzahl von 1,22 liegt. Solche Siliziumdioxidschichten auf Gläsern können reflexionsvermindernde Eigenschaften aufweisen.

Das erfindungsgemäße Hybrid-Sol umfaßt ein Gemisch großer und kleiner Siliziumoxid-Hydroxid-Partikel. Die kleine Fraktion besteht aus Partikeln mit einer Teilchengröße, die im wesentlichen im Bereich von 4-15 nm liegt, die große Fraktion besteht aus monodispersen kugelförmigen Partikeln mit einer mittleren Teilchengröße von 20-60 nm und einer Standardabweichung von höchstens 20%.

Das Gewichtsverhältnis der kleinen Partikelfraktion zur großen Partikelfraktion beträgt im Hybrid-Sol 25:1 bis 1: 5 , bevorzugt 10:1 bis 2:1 und besonders bevorzugt 3:1 bis 2:1.

Die Gesamtkonzentration der Siliziumoxid-Hydroxid-Partikel im Hybrid-Sol liegt zwischen 0,3 und 4 Gew.-%. Sie wird bevorzugt auf 1,0-2,0 Gew.-% eingestellt.

Das erfindungsgemäße Hybrid-Sol wird unter Zusatz von Lösemitteln hergestellt. Verwendet werden niedere aliphatische Alkohole, zum Beispiel Ethanol oder i-Propanol, aber auch Ketone, vorzugsweise niedere Dialkylketone, wie Aceton oder Methylisobutylketon, Ether, vorzugsweise niedere Dialkylether, wie Diethylether oder Dibutylether, Tetrahydrofuran, Amide, Ester, insbesondere Essigsäureethylester, Dimethylformamid, Amine, insbesondere Triethylamin und deren Gemische. Bevorzugt werden Alkohole als Lösemittel eingesetzt, insbesondere Ethanol, Methanol, i-Propanol, n-Propanol und ganz besonders bevorzugt Ethanol.

Die Menge des eingesetzten Lösemittels richtet sich nach der Menge der als Ausgangsmaterial eingesetzten Silizium-Verbindungen. Die Konzentration des Lösemittels im Hybrid-Sol liegt zwischen 2 und 97 Gew.-%, bevorzugt bei 15-30%.

Das Hybrid-Sol kann unter Zusatz eines basischen Katalysators hergestellt werden. Durch die Zugabe derartiger Katalysatoren steigt der pH-Wert im Hydrolysegemisch auf einen Wert von $\geq 7$ an. Der basische Katalysator beschleunigt die hydrolytische Kondensation und fördert das Partikelwachstum. Es werden beispielsweise Ammoniak oder basisch reagierende Polymere, wie Polyethylenimine, als Katalysatoren eingesetzt. Bevorzugt wird Ammoniak verwendet.

Zusätzlich kann dem erfindungsgemäßen Hybrid-Sol abschließend noch ein Stabilisator zugegeben werden. Als Stabilisatoren können beispielsweise Glycolether oder Ether anderer Alkohole eingesetzt werden. Sie können im Hybrid-Sol mit einer Konzentration von bis zu 95 Gew. -% ,vorzugsweise von 10 bis 80 Gew. -%, und besonders bevorzugt von 40 bis 70 Gew. -% enthalten sein. Als besonders geeigneter Stabilisator hat sich 1,2-Propylenglycol-monomethylether erwiesen.

Neben hydrolysierten (teil)kondensierten Silizium-Verbindungen kann das erfindungsgemäße Hybrid-Sol eines oder mehrere organische Polymere in kolloidal-dispers gelöster Form enthalten. Diese Polymere weisen OH- und/oder NH-Gruppen auf und die mittleren Molekülmassen liegen zwischen 200 und 10 000, wobei das molare Verhältnis von Polymer zu Tetraalkoxysilan 0,001 mol/mol Silan bis 0,5 mol/mol Silan beträgt. Diese Polymere können nach dem Auftragen des Hybrid-Sols auf damit zu beschichtende Substrate und Trocknen der Schicht durch Temperaturerhöhung entfernt werden, wodurch das Porenvolumen der Beschichtung weiter ansteigt.

Das Hybrid-Sol enthält außerdem noch Wasser in einer Menge von 2-80 Gew.-%, vorzugsweise von 2-50 Gew. % und besonders bevorzugt von 10-35 Gew.-%.

In einer bevorzugten Ausführungsform enthält das Hybrid-Sol

| | |
|---|---|
| 1-2 Gew.-% | $[SiO_x(OH)_y]_n$-Partikel, wobei $0<y<4$ und $0<x<2$ ist, |
| 40-70 Gew.-% | Stabilisator, |
| 15-30 Gew.-% | Lösemittel und |
| 10-35 Gew.-% | Wasser, |

wobei das Gewichtsverhältnis der kleinen Partikelfraktion zur großen Partikelfraktion 10:1 bis 2:1 beträgt.

Das erfindungsgemäße Hybrid-Sol wird wie folgt hergestellt:

Zunächst wird ein Tetraalkoxysilan in ein wäßriges, Lösemittel enthaltendes Medium gegeben, wobei die hydrolytische Polykondensation einsetzt. Das Verfahren wird im wesentlichen gemäß DE 196 42 419 und unter Durchmischung durchgeführt. Diesem Gemisch kann gegebenenfalls auch ein basischer Katalysator für die hydrolytische Polykondensation, welcher die Reaktionszeiten verkürzt, zugegeben werden. Bevorzugt wird Ammoniak eingesetzt.

Die im Hydrolysegemisch enthaltenen Lösemittel können aus den bereits vorab erwähnten Lösemitteln ausgewählt sein. Bevorzugt werden Ethanol, Methanol, i-Propanol, n-Propanol und ganz besonders bevorzugt Ethanol eingesetzt.

Die Hydrolyse erfolgt bei Temperaturen von 5 bis 90°C, bevorzugt 10 bis 30°C. Hierbei bilden sich aus dem eingesetzten Tetraalkoxysilan die kleinen Siliziumoxid-Hydroxid-Partikel mit einer Teilchengröße von 4 - 15 nm.

Das Hydrolysegemisch wird nach der Zugabe des Tetraalkoxysilans über einen Zeitraum von mindestens 5 Minuten intensiv vermischt, beispielsweise durch Rühren.

Danach wird ein Sol aus monodispersen Siliziumoxid-Hydroxid-Partikeln mit einer mittleren Teilchengröße von 20 bis 60 nm und einer Standardabweichung von höchstens 20 % zu dem oben beschriebenen Hydrolysegemisch gegeben.

Die Zeit bis zum Zusatz des Siliziumoxid-Hydroxid-Sols aus monodispersen Partikeln zum Hydrolysegemisch ist abhängig von der Verwendung von Kondensationskatalysatoren für die hydrolytische Kondensation der Siliziumverbindungen.

Frühestens 5 Minuten nach Zugabe des Tetraalkoxysilans in das wäßrige, Lösemittel enthaltende Hydrolysegemisch erfolgt die Zugabe des monodispersen Siliziumoxid-Hydroxid-Sols in dieses Gemisch. Der Zeitpunkt dieser Zugabe kann auf bis zu 48 Stunden nach der Zugabe des Tetraalkoxysilans in das Hydrolysegemisch verzögert werden. Vorzugsweise liegt dieser Zeitpunkt 5 Minuten bis 24 Stunden nach dem Beginn der Bildung von Siliziumoxid-Hydroxid-Partikeln mit einer Teilchengröße von 4-15 nm. Besonders bevorzugt ist ein Zeitrahmen von 20 bis 180 Minuten nach dem Start der Reaktion.

Wird der Zugabezeitpunkt auf mehr als 48 Stunden nach dem Start der Reaktion ausgedehnt, lassen sich gegenüber einer Zugabe innerhalb von 48 Stunden keine Unterschiede in den Eigenschaften des Hybrid-Sols mehr feststellen.

Der Zeitpunkt der Zugabe des Siliziumoxid-Hydroxid-Sols aus monodispersen Partikeln zum Hydrolysegemisch bestimmt die Eigenschaften des erfindungsgemäßen Hybrid-Sols maßgeblich. Auf diese Weise wird eine statistische Verteilung der monodispersen Partikel in den kleinen Siliziumoxid-Hydroxid-Partikeln erreicht und eine Anhäufung der monodispersen Partikel im Sinne einer "Inselbildung" vermieden, was zu einer schlechten Abriebstabilität führen würde.

Das monodisperse Siliziumoxid-Hydroxid-Sol wird dem Hydrolysegemisch vorzugsweise in einer Portion zugesetzt.

In einer besonderen Ausführungsform erfolgt die Herstellung des Siliziumoxid-Hydroxid-Sols aus monodispersen Partikeln nach dem in US 4 775 520 beschriebenen Verfahren. Hierzu wird das Tetraalkoxysilan in ein wäßrig-alkoholisch-ammoniakalisches Hydrolysegemisch gebracht und intensiv durchmischt, wobei primäre Siliziumoxid-Hydroxid-Partikel erzeugt werden. Als geeignete Tetraalkoxysilane können alle problemlos hydrolysierbaren Kieselsäureorthoester aliphatischer Alkohole eingesetzt werden. In erster Linie kommen hierbei die Ester aliphatischer Alkohole mit 1-5 C-Atomen in Betracht, wie etwa von Methanol, Ethanol, n- oder i-Propanol sowie der isomeren Butanole und Pentanole. Diese können einzeln, aber auch im Gemisch eingesetzt werden. Bevorzugt sind die Kieselsäureorthoester der $C_1$-$C_3$-Alkohole, insbesondere Tetraethoxysilan. Als Alkoholkomponente sind aliphatische $C_1$-$C_5$-Alkohole, bevorzugt $C_1$-$C_3$-Alkohole wie Methanol, Ethanol und n- oder i-Propanol geeignet. Diese können einzeln, aber auch im Gemisch miteinander vorliegen. Die Zugabe des Tetraalkoxysilans zum Gemisch erfolgt vorzugsweise in einer Portion, wobei der Reaktand in reiner Form oder auch in Lösung in einem der genannten Alkohole vorliegen kann. Zur Erzeugung der primären Siliziumoxid-Hydroxid-Partikel kann eine Konzentration von Tetraalkoxysilan im Reaktionsgemisch zwischen etwa 0,01 bis etwa 1 mol/l gewählt werden. Nach dem Zusammenbringen der Reaktanden setzt die Reaktion sofort oder nach wenigen Minuten ein, was sich durch eine alsbaldige Opaleszenz des Reaktionsgemisches durch die entstehenden Teilchen zeigt.

Das Hydrolysegemisch, welches primäre Siliziumoxid-Hydroxid-Partikel enthält, wird anschließend kontinuierlich mit weiterem Tetraalkoxysilan in der Art versetzt, dass im wesentlichen keine neuen Siliziumoxid-Hydroxid-Partikel entstehen. Vielmehr wachsen die bereits vorhandenen primären Siliziumoxid-Hydroxid-Partikel zu größeren, monodispersen Teilchen.

Je nach Wahl der Reaktanden sowie ihrer Konzentration im Reaktionsgemisch lassen sich Partikel mit einer mittleren Teilchengröße zwischen 20 nm und 60 nm und mit einer Standardabweichung von höchstens 20 % erhalten.

Als vorteilhaft hat es sich erwiesen, die Reaktion zur Erzeugung dieser Partikel bei höherer Temperatur durchzuführen. Günstig sind hierbei Temperaturen zwischen 35°C und 80°C, vorzugsweise zwischen 40°C und 70°C. Es zeigte sich, daß bei erhöhter Temperatur die Teilchengrößenstreuung abnimmt, allerdings auch die mittlere Teilchengröße. Bei niedrigeren Temperaturen, d.h. um Raumtemperatur, erhält man bei sonst gleichen Bedingungen größere Teilchen mit größerer Größenstreuung.

Zur Erhöhung der Stabilität des monodispersen Siliziumoxid-Hydroxid-Sols kann es sich erforderlich machen, Alkohol und/oder Ammoniak aus dem Sol zu entfernen. Dies geschieht nach den bekannten Methoden gemäß dem Stand der Technik, beispielsweise durch Temperaturerhöhung zur Entfernung des flüchtigen Ammoniaks.

Als monodispers werden hier Partikel bezeichnet, welche eine Standardabweichung von höchstens 20 %, insbesondere von höchstens 15 % und besonders bevorzugt von höchstens 12 % aufweisen und welche im wesentlichen als diskrete Partikel vorliegen.

Unter intensiver Durchmischung, beispielsweise durch Rühren, wird das Siliziumoxid-Hydroxid-Sol aus monodispersen Partikeln dem Hydrolysegemisch zugesetzt. Bei Temperaturen von 10 bis 40°C wird diese Durchmischung über einen Zeitraum von 1 Minute bis 48 Stunden, bevorzugt 10 min bis 5 Stunden, fortgeführt.

In der darauf folgenden Stufe des Verfahrens zur Herstellung des Hybrid-Sols kann dem Hybrid-Sol ein Stabilisator zugesetzt werden. Als Stabilisatoren werden beispielsweise Glycolether oder Ether anderer Alkohole eingesetzt. Bevorzugt wird 1,2-Propylenglycol-1-monomethylether verwendet. Anschließend wird das stabilisierte Solgemisch über einen Zeitraum von 1 min bis 24 Stunden, bevorzugt 5 min bis 1 Stunde, intensiv vermischt.

Falls erforderlich, kann das entstandene Hybrid-Sol anschließend filtriert werden. In diesem Falle erhält man nach Filtration durch ein übliches Filter, vorzugsweise mit 1-5 $\mu$m Porenweite, das gewünschte Sol, welches der weiteren Verwendung zugeführt werden kann.

Das erfindungsgemäße Hybrid-Sol wird nach üblichen Methoden auf die zu entspiegelnden Oberflächen aufgetragen und getrocknet. Es versteht sich von selbst, daß in Abhängigkeit von der gewünschten Schichtdicke die Viskosität der erfindungsgemäßen Beschichtungslösung und die Parameter des Beschichtungsvorganges, z.B. die Geschwindigkeit des Eintauchens und Herausziehens des zu beschichtenden Substrates in die bzw. aus der Beschichtungslösung, aufeinander abgestimmt sein müssen.

Ebenso selbstverständlich ist es, dass das zu beschichtende Substrat vor der Beschichtung den üblichen Reinigungs- und/oder Oberflächenvorbehandlungsmethoden unterzogen wird, welche in der Beschichtungstechnologie im allgemeinen angewendet werden. Die Art der Vorbehandlung kann dabei das Beschichtungsergebnis sehr positiv beeinflussen. Die insgesamt hierzu erforderlichen Maßnahmen sind jedoch dem Fachmann hinlänglich bekannt.

Geeignete Verfahren zum Aufbringen des Hybrid-Sols auf die zu entspiegelnden Oberflächen sind beispielsweise Tauchverfahren, Sprühverfahren oder Rotationsbeschichtungsverfahren. Die gängigen Ziehgeschwindigkeiten bei Tauchverfahren liegen zwischen 0,5 - 70 cm/min.

Die mit dem erfindungsgemäßen Hybrid-Sol beschichteten Glasscheiben können Temperaturen von über 700°C ausgesetzt werden, ohne dass die aufgetragene Schicht hierbei sintert und ein signifikanter Verlust an Porosität und damit verbunden ein Verlust an Transmission zu beobachten ist. Der Härtungsprozeß wird dabei so ausgeführt, wie es der Herstellung von Sicherheitsglas entspricht. Das bedeutet, das beschichtete Glas wird bis zum Erweichungspunkt erhitzt und dann abgeschreckt. Schichten bekannter Sol-Gel-Systeme sintern ab einer Temperatur von etwa 550°C (Sol Gel Science, C.F. Brinker, G.W. Scherer, Academic Press 1990, S. 583, 631; Sol-Gel Technology for Thin Films, Noyes Publications, 1988, ed. Lisa C. Klein, S. 70).

Überraschenderweise wurde festgestellt, dass auch durch Trocknen bei Raumtemperatur über einen Zeitraum von einigen Stunden eine Härtung der Schicht erreicht werden kann, die in ihrer Abriebstabilität der bei 700°C gehärteten Schicht entspricht. Ein solcher Effekt ist bisher noch nicht beschrieben worden. Es ist im Gegenteil übliche Lehrmeinung, daß eine Temperaturbeaufschlagung für die Härtung Sol-Gel-abgeleiteter $SiO_2$-Schichten notwendig ist. So weist Cathro et al. in Solar Energie 32 (1984), S. 573 darauf hin, daß ausreichend wischfeste $SiO_2$-Antireflexschichten nur durch Härten bei mindestens 500°C zu erhalten sind. Moulton et al. weisen in US 2 601 123 sogar darauf hin, daß die Temperatur bei dem Tempern der Gelschicht im Erweichungsbereich des Glases liegen sollte. Das eröffnet die Möglichkeit, abriebfeste Antireflexschichten auf Sicherheitsglas so zu erhalten, indem man das unbeschichtete Glas zunächst im Rollenofen härtet und anschließend beschichtet. Hierdurch können Schichtinhomogenitäten, die durch den Ofenprozeß bedingt sind, vermieden werden.

Dieses Verfahren schließt natürlich nicht aus, dass die erhaltenen reflexionsvermindernden Schichten durch eine zusätzliche mechanische Nachbehandlung (glätten, polieren, etc.) noch in ihrer Abriebfestigkeit verbessert werden können.

Die mit dem Hybrid-Sol erhaltenen Antireflexschichten zeichnen sich durch eine hohe Abriebstabilität aus. Die Abriebfestigkeit wurde nach DIN EN 1096-2 getestet. Dabei wird ein Filz, der mit einem Gewicht belastet ist, auf der Schicht hin- und hergerieben. Mit einem Prüfgewicht von 400 g konnten nach 100 Hüben keine Beschädigungen der Schicht festgestellt werden. Auch bei Verwendung eines Prüfgewichtes von 1000 g blieb die Schicht ohne Kratzer. Die mit dem erfindungsgemäßen Hybrid-Sol erhaltene Schicht besitzt damit eine erheblich bessere Abriebfestigkeit gegenüber einer Antireflexschicht, die mit dem in DE 196 42 419 beschriebenen Sol erhalten wird. Diese Schicht weist nämlich bereits nach 10 Hüben erhebliche Beschädigungen auf.

Im Vergleich zu dem in DE 100 51 725 beschriebenen Sol zeigt die durch das erfindungsgemäße Hybrid-Sol erhaltene Schicht bei gleicher Abriebfestigkeit ein homogeneres Erscheinungsbild. Die Schicht besitzt keine Streifenstruktur. Damit werden die positiven Eigenschaften der beiden aus dem Stand der Technik bekannten Sole vereinigt.

Ein weiterer Vorteil des erfindungsgemäßen Hybrid-Sols ist die gute Beschichtbarkeit von strukturiertem Glas. Eine Strukturglasscheibe, die auf einer Seite eine Prismenstruktur besitzt und auf der anderen leicht aufgerauht ist, hat 94,6 % solare Transmission (AM 1.5), wenn sie mit dem erfindungsgemäßen Hybrid-Sol beschichtet ist, dagegen nur 93,1 % solare Transmission (AM 1.5), wenn sie mit dem wäßrigen Sol gemäß DE 100 51 725 beschichtet ist. Die Angabe AM 1.5 bezieht sich hierbei auf eine standardisierte Berechnung der solaren Transmission, wobei der gemessene Transmissionswert mit dem Gewichtungsfaktor AM multipliziert wird. Der Ausdruck AM steht dabei für den Air Mass Index, während sich die Angabe 1.5 auf die Lichtverhältnisse in Mitteleuropa bezieht.

Mit Hilfe von REM-Aufnahmen wurde festgestellt, daß die mit dem erfindungsgemäßen Hybrid-Sol erhaltene Antireflexschicht folgende Struktur besitzt:

Kugelförmige $SiO_2$-Partikel mit einer mittleren Teilchengröße von 20-60 nm und einer Standardabweichung von höchstens 20 % sind in ein Netzwerk aus kleinen $SiO_2$-Partikeln mit einer Teilchengröße von 4-15 nm homogen eingebettet. Daraus resultiert die hohe Abriebfestigkeit bei gleichzeitig ausgezeichnetem ästhetischen Erscheinungsbild der Schicht.

Eine derartige Struktur erhält man nicht, wenn man ein Sol gemäß DE 196 42 419 und die kugelförmigen $SiO_2$-Partikel hergestellt gemäß US 4 775 520 einfach miteinander mischt. Ein solches Gemisch ergibt keine Schichten, die eine homogene Struktur besitzen. Die Abriebfestigkeit einer mit solch einem Gemisch hergestellten Schicht sowie die Ästhetik als auch die Beschichtbarkeit von Strukturglas sind mangelhaft.

Anhand von Ausführungsbeispielen wird die Erfindung näher erläutert.

**Beispiel 1**

29,4 g einer wäßrigen, 0.08 n Ammoniumhydroxidlösung werden mit 380 g Ethanol vollständig vermischt und dazu unter weiterem Rühren 50,7 g Tetramethoxysilan gegeben. Nach einer Rührzeit von 150 Minuten werden 400 g 5%iges monodisperses Siliziumoxid-Hydroxid-Sol, welches Siliziumoxid-Hydroxid-Partikel mit einer mittleren Teilchengröße von 25 nm enthält, zugegeben und 60 Minuten weitergerührt, bis noch 970 g 1,2-Propylenglycolmonomethylether dem Ansatz hinzugefügt werden. Das so hergestellte Hybrid-Sol wird abschließend durch einen Glasfaser-Vorfilter filtriert.

**Beispiel 2**

25,4 g Polyethylenglykol mit einer mittleren Molekularmasse von 200 g/mol werden in einer Mischung aus 29,4 g 0.08 n wäßrigem Ammoniumhydroxid und 357 g Ethanol gelöst. Zu dieser Lösung wird unter Rühren 50,8 g Tetramethoxysilan gegeben. Nach einer Rührzeit von 125 Minuten werden 400 g 5%iges monodisperses Siliziumoxid-Hydroxid-Sol, welches Siliziumoxid-Hydroxid-Partikel mit einer mittleren Teilchengröße von 25 nm enthält, zugegeben und 30 Minuten weitergerührt, bis noch 1300 g 1,2-Propylenglycolmonomethylether dem Ansatz hinzugefügt werden. Das so hergestellte Hybrid-Sol wird abschließend durch einen Glasfaser-Vorfilter filtriert.

**Patentansprüche**

1. Hybrid-Sol, umfassend

   - $[SiO_x(OH)y]_n$ -Partikel, wobei $0<y<4$ und $0<x<2$ ist, die aus einem Gemisch aus einer ersten Fraktion von Partikeln mit einer Teilchengröße von 4-15 nm und einer zweiten Fraktion von Partikeln mit einer mittleren Teilchengröße von 20-60 nm bestehen,
   - Wasser und ein Lösemittel, erhältlich durch

   hydrolytische Polykondensation von Tetraalkoxysilanen in einem wäßrigen, Lösemittel enthaltenden Medium, wobei Siliziumoxid-Hydroxid-Partikel mit einer Teilchengröße von 4-15 nm erhalten werden, unter Zusatz eines monodispersen Siliziumoxid-Hydroxid-Sols mit einer mittleren Teilchengröße von 20-60 nm und einer Standardabweichung von höchstens 20 %.

2. Hybrid-Sol gemäß Anspruch 1, wobei die hydrolytische Polykondensation in Anwesenheit eines basischen Katalysators erfolgt.

3. Hybrid-Sol gemäß Anspruch 1 oder 2, wobei abschließend ein Stabilisator zugesetzt wird.

4. Hybrid-Sol gemäß einem oder mehreren der Ansprüche 1 bis 3, wobei das monodisperse Siliziumoxid- Hydroxid-Sol erhältlich ist durch Zugabe eines Tetraalkoxysilans in ein wäßrig-alkoholisch-ammoniakalisches Hydrolysegemisch, wobei sich primäre Siliziumoxid- Hydroxid-Partikel bilden, und kontinuierliches Zusetzen von weiterem Tetraalkoxysilan zu dieser Mischung in der Art, dass im wesentlichen keine weiteren Partikel entstehen.

5. Hybrid-Sol gemäß Anspruch 4, wobei das monodisperse Siliziumoxid-Hydroxid- Sol bei einer Temperatur von 35-80 °C erhältlich ist.

6. Hybrid-Sol gemäß Anspruch 4 oder 5, wobei aus dem monodispersen Siliziumoxid- Hydroxid- Sol vor der Zugabe in das wäßrige, Lösemittel und Tetraalkoxysilan enthaltende Hydrolysegemisch Alkohol und Ammoniak entfernt werden.

7. Hybrid-Sol gemäß einem oder mehreren der Ansprüche 1 bis 6, wobei das Gewichtsverhältnis der ersten Partikelfraktion zur zweiten Partikelfraktion 25:1 bis 1:5 beträgt.

8. Hybrid-Sol gemäß einem oder mehreren der Ansprüche 1 bis 7, wobei die Konzentration der $[SiO_x(OH)_y]_n$ -Partikel 0,3 -4 Gew. -% beträgt.

9. Hybrid-Sol gemäß einem oder mehreren der Ansprüche 1 bis 8, wobei das Lösemittel ein niederer aliphatischer Alkohol ist.

10. Hybrid-Sol gemäß Anspruch 9, wobei der niedere aliphatische Alkohol Methanol, Ethanol, i-Propanol oder n-Propanol ist.

11. Hybrid-Sol gemäß einem oder mehreren der Ansprüche 3 bis 10, wobei der Stabilisator ein Glycolether oder ein Ether anderer Alkohole oder ein Gemisch dieser Ether ist.

12. Hybrid-Sol gemäß einem oder mehreren der Ansprüche 1 bis 11, umfassend 0,3-4 Gew. -% $[SiO_x(OH)_y]_n$ -Partikel, 2-50 Gew. -% Wasser sowie 2-97 Gew. -% Lösemittel.

13. Hybrid-Sol gemäß einem oder mehreren der Ansprüche 1 bis 11, umfassend 1-2 Gew. -% $[SiO_x(OH)y]_n$ -Partikel, 10-35 Gew. -% Wasser, 15-30 Gew. -% Lösemittel und 40 -70 Gew .-% Stabilisator.

14. Verfahren zur Herstellung eines Hybrid-Sols gemäß Anspruch 1, durch hydrolytische Polykondensation eines Tetraalkoxysilans in einem wäßrigen, Lösemittel enthaltenden Medium, wobei ein Hydrolysegemisch mit Siliziumoxid-Hydroxid-Partikeln der Teilchengröße 4-15 nm erhalten wird, und Zugabe eines monodispersen Siliziumoxid-Hydroxid-Sols mit einer mittleren Teilchengröße von 20-60 nm und einer Standardabweichung von höchstens 20 %, zu einem Zeitpunkt von mindestens 5 Minuten nach Zugabe des Tetraalkoxysilans in das wäßrige, Lösemittel enthaltende Medium.

15. Verfahren gemäß Anspruch 14, wobei die hydrolytische Polykondensation bei einer Temperatur von 5 bis 90 °C durchgeführt wird.

16. Verfahren gemäß Anspruch 14 oder 15, wobei das Hybrid- Sol nach der Zugabe des monodispersen Siliziumoxid-Hydroxid- Sols bei Temperaturen von 10 bis 40°C über einen Zeitraum von 1 Minute bis 48 Stunden intensiv vermischt wird.

17. Verfahren gemäß einem oder mehreren der Ansprüche 14 bis 16, wobei das Hydrolysegemisch mit Siliziumoxid-Hydroxid- Partikeln der Teilchengröße 4-15 nm unter Zugabe eines basischen Katalysators hergestellt wird und einen pH-Wert von $\geq$ 7 aufweist.

18. Verfahren gemäß einem oder mehreren der Ansprüche 14 bis 17, wobei abschließend ein Stabilisator zugesetzt wird.

19. Verfahren gemäß Anspruch 18, wobei der Stabilisator ein Glycolether oder ein Ether anderer Alkohole oder ein Gemisch dieser Ether ist.

20. Verfahren gemäß einem oder mehreren der Ansprüche 14 bis 19, wobei die Zugabe des monodispersen Siliziumoxid-Hydroxid- Sols zum Hydrolysegemisch zu einem Zeitpunkt von mindestens 5 Minuten bis höchstens 48 Stunden nach Zugabe des Tetraalkoxysilans in das wäßrige, Lösemittel enthaltende Medium erfolgt.

21. Verfahren gemäß Anspruch 20, wobei die Zugabe nach 20 bis 180 Minuten erfolgt.

22. Verwendung des Hybrid- Sols gemäß einem oder mehreren der Ansprüche 1-13 zur Abscheidung abriebfester, optisch transparenter, poröser $SiO_2$-Schichten mit einer Brechzahl von 1,20 bis 1,40 auf Glas.

23. Glas mit einer porösen Antireflexschicht aus Siliziumdioxid mit einer Brechzahl von 1,20 bis 1,40, abgeschieden aus einem Hybrid- Sol gemäß den Ansprüchen 1 bis 13.

**Claims**

1. Hybrid sol comprising

   - $[SiO_x(OH)_y]_n$ particles, where $0<y<4$ and $0<x<2$, which consist of a mixture of a first fraction of particles having a particle size of 4-15 nm and a second fraction of particles having a mean particle size of 20-60 nm,
   - water and a solvent, obtainable by

   hydrolytic polycondensation of tetraalkoxysilanes in an aqueous, solvent-containing medium, giving silicon oxide hydroxide particles having a particle size of 4-15 nm, with addition of a monodisperse silicon oxide hydroxide sol having a mean particle size of 20-60 nm and a maximum standard deviation of 20%.

2. Hybrid sol according to Claim 1, where the hydrolytic polycondensation is carried out in the presence of a basic catalyst.

3. Hybrid sol according to Claim 1 or 2, where a stabiliser is subsequently added.

4. Hybrid sol according to one or more of Claims 1 to 3, where the monodisperse silicon oxide hydroxide sol is obtainable by addition of a tetraalkoxysilane to an aqueous-alcoholic ammoniacal hydrolysis mixture, with formation of primary silicon oxide hydroxide particles, and continuous addition of further tetraalkoxysilane to this mixture in such a way that essentially no further particles are formed.

5. Hybrid sol according to Claim 4, where the monodisperse silicon oxide hydroxide sol is obtainable at a temperature of 35-80°C.

6. Hybrid sol according to Claim 4 or 5, where alcohol and ammonia are removed from the monodisperse silicon oxide hydroxide sol before addition to the aqueous, solvent- and tetraalkoxysilane-containing hydrolysis mixture.

7. Hybrid sol according to one or more of Claims 1 to 6, where the weight ratio between the first particle fraction and the second particle fraction is 25:1 to 1:5.

8. Hybrid sol according to one or more of Claims 1 to 7, where the concentration of the $[SiO_x(OH)y]_n$ particles is 0.3-4% by weight.

9. Hybrid sol according to one or more of Claims 1 to 8, where the solvent is a lower aliphatic alcohol.

10. Hybrid sol according to Claim 9, where the lower aliphatic alcohol is methanol, ethanol, i-propanol or n-propanol.

11. Hybrid sol according to one or more of Claims 3 to 10, where the stabiliser is a glycol ether or an ether of another alcohol or a mixture of these ethers.

12. Hybrid sol according to one or more of Claims 1 to 11, comprising 0.3-4% by weight of $[SiO_x(OH)_y]_n$ particles, 2-50% by weight of water and 2-97% by weight of solvent.

13. Hybrid sol according to one or more of Claims 1 to 11, comprising 1-2% by weight of $[SiO_x(OH)_y]_n$ particles, 10-35% by weight of water, 15-30% by weight of solvent and 40-70% by weight of stabiliser.

14. Process for the preparation of a hybrid sol according to Claim 1 by hydrolytic polycondensation of a tetraalkoxysilane in an aqueous, solvent-containing medium, giving a hydrolysis mixture comprising silicon oxide hydroxide particles having a particle size of 4-15 nm, and addition of a monodisperse silicon oxide hydroxide sol having a mean particle size of 20-60 nm and a maximum standard deviation of 20% at a time at least 5 minutes after addition of the tetraalkoxysilane to the aqueous, solvent-containing medium.

15. Process according to Claim 14, where the hydrolytic polycondensation is carried out at a temperature of 5 to 90°C.

16. Process according to Claim 14 or 15, where the hybrid sol is mixed vigorously for a period of 1 minute to 48 hours at temperatures of 10 to 40°C after addition of the monodisperse silicon oxide hydroxide sol.

17. Process according to one or more of Claims 14 to 16, where the hydrolysis mixture comprising silicon oxide hydroxide particles having a particle size of 4-15 nm is prepared with addition of a basic catalyst and has a pH of $\geq 7$.

18. Process according to one or more of Claims 14 to 17, where a stabiliser is finally added.

19. Process according to Claim 18, where the stabiliser is a glycol ether or an ether of another alcohol or a mixture of these ethers.

20. Process according to one or more of Claims 14 to 19, where the addition of the monodisperse silicon oxide hydroxide sol to the hydrolysis mixture is carried out at a time from at least 5 minutes to at most 48 hours after addition of the tetraalkoxysilane to the aqueous, solvent-containing medium.

21. Process according to Claim 20, where the addition is carried out after 20 to 180 minutes.

22. Use of the hybrid sol according to one or more of Claims 1-13 for the deposition of abrasion-resistant, optically transparent, porous $SiO_2$ layers having a refractive index of 1.20 to 1.40 on glass.

23. Glass having a porous antireflection layer of silicon dioxide having a refractive index of 1.20 to 1.40, deposited from a hybrid sol according to Claims 1 to 13.

**Revendications**

1. Sol hybride comprenant

   - des particules de $[SiO_x(OH)_y]_n$, où 0<y<4 et 0<x<2, qui sont constituées d'un mélange d'une première fraction de particules ayant une taille de particules de 4-15 nm et d'une deuxième fraction de particules ayant une taille de particules moyenne de 20-60 nm,
   - de l'eau et un solvant, pouvant être obtenu par

   la polycondensation hydrolytique de tétraalcoxysilanes dans un milieu aqueux contenant du solvant, donnant des particules d'hydroxyde et d'oxyde de silicium ayant une taille de particules de 4-15 nm, avec l'addition d'un sol monodispersé d'hydroxyde et d'oxyde de silicium ayant une taille de particules moyenne de 20-60 nm et un écart-type maximum de 20%.

2. Sol hybride selon la revendication 1, dans lequel la polycondensation hydrolytique est réalisée en présence d'un catalyseur basique.

3. Sol hybride selon la revendication 1 ou 2, dans lequel on ajoute ensuite un stabilisant.

4. Sol hybride selon l'une ou plusieurs parmi les revendications 1 à 3, dans lequel le sol monodispersé d'hydroxyde et d'oxyde de silicium peut être obtenu par l'addition d'un tétraalcoxysilane à un mélange d'hydrolyse ammoniacal alcoolique-aqueux, avec la formation de particules primaires d'hydroxyde et d'oxyde de silicium, et l'addition continue de tétraalcoxysilane supplémentaire à ce mélange de telle sorte que sensiblement aucune particule supplémentaire ne soit formée.

5. Sol hybride selon la revendication 4, dans lequel le sol monodispersé d'hydroxyde et d'oxyde de silicium peut être obtenu à une température de 35-80°C.

6. Sol hybride selon la revendication 4 ou 5, dans lequel l'alcool et l'ammoniac sont éliminés du sol monodispersé d'hydroxyde et d'oxyde de silicium avant l'addition au mélange d'hydrolyse aqueux contenant du solvant et du tétraalcoxysilane.

7. Sol hybride selon l'une ou plusieurs parmi les revendications 1 à 6, dans lequel le rapport pondéral entre la première fraction de particules et la deuxième fraction de particules va de 25:1 à 1:5.

8. Sol hybride selon l'une ou plusieurs parmi les revendications 1 à 7, dans lequel la concentration en particules de $[SiO_x(OH)_y]_n$ est de 0,3-4% en poids.

9. Sol hybride selon l'une ou plusieurs parmi les revendications 1 à 8, dans lequel le solvant est un alcool aliphatique inférieur.

10. Sol hybride selon la revendication 9, dans lequel l'alcool aliphatique inférieur est le méthanol, l'éthanol, l'i-propanol ou le n-propanol.

11. Sol hybride selon l'une ou plusieurs parmi les revendications 3 à 10, dans lequel le stabilisant est un éther de glycol ou un éther d'un autre alcool ou un mélange de ces éthers.

12. Sol hybride selon l'une ou plusieurs parmi les revendications 1 à 11, comprenant 0,3-4% en poids de particules de $[SiO_x(OH)_y]_n$, 2-50% en poids d'eau et 2-97% en poids de solvant.

13. Sol hybride selon l'une ou plusieurs parmi les revendications 1 à 11, comprenant 1-2% en poids de particules de $[SiO_x(OH)_y]_n$, 10-35% en poids d'eau, 15-30% en poids de solvant et 40-70% en poids de stabilisant.

14. Procédé de préparation d'un sol hybride selon la revendication 1 par polycondensation hydrolytique d'un tétraalcoxysilane dans un milieu aqueux contenant du solvant, donnant un mélange d'hydrolyse comprenant des particules d'hydroxyde et d'oxyde de silicium ayant une taille de particules de 4-15 nm, et l'addition d'un sol monodispersé d'hydroxyde et d'oxyde de silicium ayant une taille de particules moyenne de 20-60 nm et un écart-type maximum de 20% à un moment au moins 5 minutes après l'addition du tétraalcoxysilane au milieu aqueux contenant du solvant.

**15.** Procédé selon la revendication 14, dans lequel la polycondensation hydrolytique est réalisée à une température allant de 5 à 90°C.

**16.** Procédé selon la revendication 14 ou 15, dans lequel le sol hybride est mélangé vigoureusement pendant une période allant de 1 minute à 48 heures à des températures allant de 10 à 40°C après l'addition du sol monodispersé d'hydroxyde et d'oxyde de silicium.

**17.** Procédé selon l'une ou plusieurs parmi les revendications 14 à 16, dans lequel le mélange d'hydrolyse comprenant des particules d'hydroxyde et d'oxyde de silicium ayant une taille de particules de 4-15 nm est préparé avec l'addition d'un catalyseur basique et possède un pH $\geq 7$.

**18.** Procédé selon l'une ou plusieurs parmi les revendications 14 à 17, dans lequel un stabilisant est finalement ajouté.

**19.** Procédé selon la revendication 18, dans lequel le stabilisant est un éther de glycol ou un éther d'un autre alcool ou un mélange de ces éthers.

**20.** Procédé selon l'une ou plusieurs parmi les revendications 14 à 19, dans lequel l'addition du sol monodispersé d'hydroxyde et d'oxyde de silicium au mélange d'hydrolyse est réalisée à un moment allant d'au moins 5 minutes à au plus 48 heures après l'addition du tétraalcoxysilane au milieu aqueux contenant du solvant .

**21.** Procédé selon la revendication 20, dans lequel l'addition est réalisée après 20 à 180 minutes.

**22.** Utilisation du sol hybride selon l'une ou plusieurs parmi les revendications 1-13, pour le dépôt de couches de $SiO_2$ poreuses, optiquement transparentes et résistantes à l'abrasion, ayant un indice de réfraction allant de 1,20 à 1,40 sur du verre.

**23.** Verre ayant une couche antireflet poreuse de dioxyde de silicium ayant un indice de réfraction allant de 1,20 à 1,40, déposée à partir d'un sol hybride selon les revendications 1 à 13.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2490662 A
- US 4019884 A
- US 4535026 A
- US 2601123 A
- DE 19642419
- DE 19828231
- DE 10051725
- US 4775520 A

**In der Beschreibung aufgeführte Nicht-Patentliteratur**

- **C. J. BRINKER ; G. W. SCHERER.** *Sol Gel Science,* 1990, 583, 631
- Sol-Gel Technology for Thin Films. Noyes Publications, 1988, 70
- **C.F. BRINKER ; G.W. SCHERER.** Sol Gel Science. Academic Press, 1990, 583, 631
- **CATHRO et al.** *Solar Energie,* 1984, vol. 32, 573